# EUROPÄISCHE PATENTANMELDUNG

(11) **EP 1 186 864 A2**
(43) Veröffentlichungstag der Anmeldung: **13.03.2002**
(21) Anmeldenummer: 01120553.1
(22) Anmeldetag: 29.08.2001
(51) Int. Cl.: G01C 21/34, G08G 1/0968

(54) **Verfahren und Vorrichtung zur Übermittlung von Navigationsinformationen von einer Datenzentrale an ein fahrzeugbasiertes Navigationssystem**

(30) Priorität: 08.09.2000 DE 10044396
(71) Anmelder: ROBERT BOSCH GMBH, 70442 Stuttgart (DE)
(72) Erfinder: Attig, Joachim, 31135 Hildesheim (DE)

(57) **Zusammenfassung**

Bei einem Verfahren zur Übermittlung von Navigationsinformationen von einer Datenzentrale(5) an ein fahrzeugbasiertes Navigationssystem (2) werden zusammen mit der optimalen Fahrtroute(10a) vom aktuellen Standort (A) des Fahrzeuges (1) zu einem vorgegebenen Ziel (B) verschiedene Alternativrouten (10b, 10c, 10d) berechnet und dem Navigationssystem (2) übermittelt. Bei Auftreten eines unerwarteten Hindernisses oder bei einer Abweichung von der vorgegebenen Fahrtroute (10a) kann sofort auf eine Alternativroute zurückgegriffen werden. Die Auswahl der Alternativrouten erfolgt entsprechend den Wahrscheinlichkeiten, mit der diese Routen zur Verwendung kommen. Diese richten sich zum Beispiel nach der Wahrscheinlichkeit, dass bestimmte Streckenabschnitte der optimalen Route gestört sind.

## Beschreibung

### Technisches Gebiet

Die Erfindung betrifft ein Verfahren und eine Vorrichtung zur Übermittlung von Navigationsinformationen von einer Datenzentrale an ein fahrzeugbasiertes Navigationssystem, wobei ein Fahrtziel und der aktuelle Standort des Fahrzeuges an die Datenzentrale übermittelt werden und wobei die Datenzentrale hieraus eine optimale Route berechnet und diese ganz oder sukzessive und in Teilstücke zerlegt an das fahrzeugbasierte Navigations-system zurück übermittelt. Ferner betrifft die Erfindung eine Vorrichtung zur Übermittlung von Navigationsinformationen von einer Datenzentrale an ein fahrzeugbasiertes Navigationssystem, enthaltend eine Kommunikationseinrichtung zur Übermittlung des gewünschten Fahrtziels und des aktuellen Standortes des Fahrzeuges an die Datenzentrale und zur Rückübermittlung von Routendaten aus der Datenzentrale an das fahrzeugbasierte Navigationssystem, sowie eine Berechnungseinheit in der Datenzentrale zur Berechnung von Routenvorschlägen auf der Basis des übermittelten Fahrzeugstandortes und des Fahrtzieles.

### Stand der Technik

Ein Verfahren und eine Vorrichtung der eingangs genannten Art sind aus der DE-A-197 37 256 bekannt. Im Gegensatz zu einem ausschließlich fahrzeugbasierten Navigationssystem wird bei einem System gemäß der DE-A-197 37 256 ein erheblicher Teil der Datenverarbeitung in einer stationären Datenzentrale durchgeführt, so dass das fahrzeugbasierte Navigationssystem hiervon entlastet ist. Dies hat zum einen den Vorteil, dass im Fahrzeug nicht umfangreiche digitale Karten vorhanden sein müssen, da die entsprechenden Datenbestände in der Datenzentrale vorhanden sind. Ferner sind die der Berechnung zugrunde gelegten Kartendaten ständig auf dem neuesten Stand und können insbesondere auch aktuelle Entwicklungen wie zum Beispiel Staus oder geänderte Straßenführungen berücksichtigen. Schließlich hat ein derartiges System auch den Vorteil, dass die sehr rechenintensive Bestimmung einer optimalen Route in der Datenzentrale ausgeführt werden kann, so dass das fahrzeugbasierte Navigationssystem hinsichtlich seiner Rechenleistungen einfacher und damit kostengünstiger gehalten werden kann.

Bei dem aus der DE-A-197 37 256 bekannten Verfahren wird die gesamte Fahrtroute von einem Startpunkt A zu einem Ziel B in kleinere Routenabschnitte zerlegt, und die gesamte Route wird stückweise entsprechend dem Vorankommen des Fahrzeuges von der Datenzentrale an das Fahrzeug übermittelt. Dies hat den Vorteil, dass bei einer unvorhergesehenen Abweichung des Fahrzeuges von der vorgeschlagenen Route gegebenenfalls die Berechnung einer geänderten optimalen Route in der Datenzentrale durchgeführt werden kann.

Probleme entstehen bei dem bekannten System allerdings dann, wenn die vorgeschlagene Fahrtroute aus unvorhergesehenen Gründen wie zum Beispiel einem kurz zuvor entstandenen Stau auf der Straße nicht weiter verfolgt werden kann. In diesem Falle muss das fahrzeugbasierte Navigationssystem die Berechnung einer Ersatzroute vornehmen, wobei als Ziel der Ersatzroute der Endpunkt des momentan befahrenen Teilstückes der von der Datenzentrale berechneten optimalen Gesamtroute dient. Dieses Vorgehen hat jedoch zwei Nachteile. Zum einen führt das Anfahren des genannten Endpunktes des Teilstückes der Gesamtroute in der Regel nicht auf einem optimalen Weg zum eigentlichen Fahrtziel. Zum anderen muss die Berechnung einer Änderungsroute im fahrzeugbasierten Navigationssystem erfolgen, was aufgrund des Rechenaufwandes für die Routenplanung entsprechend viel Zeit kostet. Eine sofortige Reaktion auf die Änderung in der Routenführung ist damit nicht möglich. Zudem muss das fahrzeugbasierte Navigationssystem eine gewisse Mindestrechenleistung aufweisen, damit es solche Änderungsrouten berechnen kann.

### Darstellung der Erfindung, Aufgabe, Lösung, Vorteile

Vor diesem Hintergrund war es Aufgabe der vorliegenden Erfindung, ein Verfahren und eine Vorrichtung der eingangs genannten Art derart zu verbessern, dass ein besseres Reaktionsverhalten auf unvorhergesehen auftretende Hindernisse in der verfolgten Routenführung erreicht wird.

Diese Aufgabe wird durch ein Verfahren mit den Merkmalen des Anspruchs 1 sowie eine Vorrichtung mit den Merkmalen des Anspruchs 6 gelöst. Vorteilhafte Ausgestaltungen sind jeweils in den Unteransprüchen enthalten.

Bei dem Verfahren zur Übermittlung von Navigationsinformationen von einer Datenzentrale an ein fahrzeugbasiertes Navigationssystem werden demnach ein Fahrtziel und der aktuelle Standort des Fahrzeuges an die Datenzentrale übermittelt, was zum Beispiel per Funk geschehen kann. Die Datenzentrale berechnet hieraus eine optimale Route und übermittelt diese ganz oder sukzessive und in Teilstücke zerlegt an das fahrzeugbasierte Navigationssystem zurück. Die Datenzentrale kann dabei auf umfangreiche und ständig mit neuesten Informationen aktualisierte Datenbestände zurückgreifen. Ferner weist sie eine ausreichend hohe Rechenleistung zur Bestimmung der optimalen Route auf. Das Verfahren ist dadurch gekennzeichnet, dass die Datenzentrale zusätzlich zur optimalen Route mindestens eine Alternativroute berechnet und diese an das fahrzeugbasierte Navigationssystem übermittelt. Wenn daher trotz Berücksichtigung der in der Datenzentrale vorliegenden aktuellen Verkehrsinformationen eine Veränderung bezüglich der optimalen Route auftritt, zum Beispiel eine Straßensperrung durch einen Unfall, kann das fahrzeugbasierte Navigationssystem unmittelbar auf die bereits berechnete und ihm vorliegende Alternativroute zurückgreifen. Das Fahrzeug kann somit sofort einer neuen Route folgen, wobei diese in Hinblick auf das Endziel der gesamten Fahrt berechnet und optimiert ist. Die Alternativroute steht zur Verfügung, ohne dass Zeit für die aufwendige Berechnung einer solchen Route im fahrzeugbasierten Navigationssystem oder in der Datenzentrale verloren ginge. Da das fahrzeugbasierte Navigationssystem in einem derartigen Falle keine eigenen Berechnungen vornehmen muss, kann es hinsichtlich seiner Rechenleistung entsprechend einfacher und damit kostengünstiger ausgelegt werden. Eine Alternative dieser Vorgehensweise besteht darin, die Alternativroute sukzessive und in Teilstücke zerlegt an das fahrzeugbasierte Navigationssystem zu übermitteln. Es hat sich vorteilhafterweise gezeigt, dass auch die Übertragung der Alternativroutendaten nur innerhalb des einen Radius von beispielsweise 10 Fahrminuten abdeckenden Bereich um die augenblickliche Fahrzeugposition nötig ist. Diese Vorgehensweise spart vorteilhafterweise Speicherplatz im fahrzeugbasierten System.

Vorzugsweise werden von der Datenzentrale mehrere Alternativrouten berechnet und an das fahrzeugbasierte Navigationssystem übermittelt, wobei die Alternativrouten vorteilhafterweise diejenigen von allen theoretisch möglichen Alternativrouten sind, welche die höchste Wahrscheinlichkeit für eine tatsächliche Verwendung aufweisen. Aufgrund der benötigten Rechenleistung und Rechenzeit zur Bestimmung von Alternativrouten in der Datenzentrale sowie aufgrund der begrenzten Speicherkapazität für Alternativrouten im fahrzeugbasierten Navigationssystem muss sich das Verfahren in der Praxis stets auf eine begrenzte Anzahl von berechneten und übermittelten Alternativrouten beschränken. Die Auswahl dieser Alternativrouten aus allen theoretisch möglichen Alternativrouten erfolgt dabei unter dem Gesichtspunkt, dass vornehmlich die Alternativrouten berechnet und übermittelt werden sollen, bei denen die größte Wahrscheinlichkeit besteht, dass sie auch tatsächlich im Fahrzeug Verwendung finden. Auf diese Weise wird gewährleistet, dass für die meisten in der Praxis auftretenden Fälle eine Alternativroute bereitsteht und dass die vorhandenen begrenzten Mittel hinsichtlich der Rechenleistung und der Speicherkapazität bestmöglich ausgenutzt werden.

Für die Festlegung und Ermittlung der Benutzungswahrscheinlichkeit einer Alternativroute können verschiedene Kriterien angesetzt werden. So kann zum Beispiel die Benutzungswahrscheinlichkeit einer Alternativroute um so größer angesetzt werden, je mehr die Alternativroute ein vorgegebenes Optimierungskriterium erfüllt. Bei der Berechnung von Routenvorschlägen orientiert sich ein Routenberechnungssystem wie dasjenige, das in der Datenzentrale verwendet wird, an vorgegebenen Optimierungskriterien. Im einfachsten Fall kann das Optimierungskriterium die zur Zurücklegung einer Route benötigte Fahrtzeit sein, die minimiert werden soll. Für jede Route vom Startpunkt zum Zielpunkt lässt sich ein bestimmter Wert des Optimierungskriteriums berechnen. Routen, deren Wert sehr nahe am Optimum liegt, werden bevorzugt als Alternativrouten dem fahrzeugbasierten Navigationssystem übermittelt, da es sich hierbei um gegenüber der optimalen Route nahezu gleichwertige Routen handelt.

Weiterhin kann die Festlegung der Benutzungswahrscheinlichkeit einer Alternativroute die Wahrscheinlichkeit dafür berücksichtigen, dass an einer Stelle der optimalen Route eine Störung auftritt, deren Berücksichtigung die Alternativroute zur optimalen Route machen würde. Voraussetzung hierfür ist, dass in den Datenbanken der Datenzentrale Informationen darüber vorhanden sind, wie groß auf bestimmten Streckenabschnitten die Wahrscheinlichkeit für das Auftreten einer Störung ist. Derartige Wahrscheinlichkeiten könnten zum Beispiel empirisch aus der Auswertung der Stau- oder Unfallhäufigkeit auf einem Streckenabschnitt bestimmt werden. Die Wahrscheinlichkeit für das Auftreten solcher Störungen kann dabei auch zeitabhängig aufgezeichnet sein, da zum Beispiel die Stauwahrscheinlichkeit zu Berufsverkehrszeiten anders ist als zu sonstigen Zeiten. Die Berechnung der Alternativrouten erfolgt demnach vorzugsweise so, dass zunächst die optimale Route berechnet wird, und dass dann gestaffelt nach ihrer Wahrscheinlichkeit an den potentiellen Störungsstellen entlang dieser optimalen Route ein Störfall beziehungsweise eine Unterbrechung angenommen und unter dieser Voraussetzung jeweils eine zugehörige Alternativroute berechnet wird. Die Benutzungswahrscheinlichkeit einer solchen Alternativroute entspricht dann der Wahrscheinlichkeit des Auftretens der Störung, die die Alternativroute notwendig macht.

Bei einer Weiterbildung des Verfahrens übermittelt die Datenzentrale zusammen mit der optimalen Route und der oder den Alternativrouten zusätzlich auch digitale Karteninformationen zur Umgebung des aktuellen Standortes des Fahrzeuges. Es ist daher nicht unbedingt erforderlich, dass im fahrzeugbasierten Navigationssystem detaillierte digitale Karten vorhanden sind, da die jeweils benötigte Umgebungsinformation von der Datenzentrale heruntergeladen werden kann. Dies hat den Vorteil, dass die übermittelten Daten immer auf dem neuesten Stand sind und auch aktuelle Informationen wie zum Beispiel Informationen über den Verkehrszustand enthalten können.

Die Erfindung betrifft weiterhin eine Vorrichtung zur Übermittlung von Navigationsinformationen von einer Datenzentrale an ein fahrzeugbasiertes Navigationssystem, enthaltend eine Kommunikationseinrichtung zur Übermittlung des gewünschten Fahrtzieles und des aktuellen Standortes des Fahrzeuges an die Datenzentrale und zur Rückübermittlung von Routendaten aus der Datenzentrale an das fahrzeugbasierte Navigations-system, sowie enthaltend eine Berechnungseinheit in der Datenzentrale zur Berechnung von Routenvorschlägen auf der Basis des übermittelten Fahrzeugstandortes und des Fahrtzieles. Die Vorrichtung ist dadurch gekennzeichnet, dass die Berechnungseinheit in der Datenzentrale so eingerichtet ist, dass sie ein Verfahren der oben erläuterten Art durchführen kann. Das heißt, dass diese Berechnungseinheit zusätzlich zur optimalen Route auch Alternativrouten berechnen kann und diese zusammen mit der optimalen Route an das fahrzeugbasierte Navigationssystem übermittelt.

Dabei werden vorzugsweise die Alternativrouten mit der höchsten Benutzungswahrscheinlichkeit berechnet und übermittelt. Zu diesem Zweck enthält die Datenzentrale vorzugsweise auch eine Datenbank, in welcher die Wahrscheinlichkeit für das Auftreten von Störungen der Streckenabschnitte der digitalen Karte verzeichnet ist.

Die Vorrichtung kann ferner im Fahrzeug eine Spracheingabeeinheit zur Aufnahme und Weiterleitung von Informationen des Fahrers an die Datenzentrale aufweisen. Die Spracheingabeeinheit kann insbesondere ein Mikrofon sein. Über die Spracheingabeeinheit ist es möglich, dass der Fahrer Vorgaben wie zum Beispiel das Fahrtziel mündlich eingibt, wobei diese Informationen in der Datenzentrale entweder automatisch oder durch Personal ausgewertet und in einen Rechner eingegeben werden. Die Möglichkeit der mündlichen Eingabe von Fahrtzielen steigert den Benutzungskomfort des Navigationssystems erheblich.

### Bester Weg zur Ausführung der Erfindung

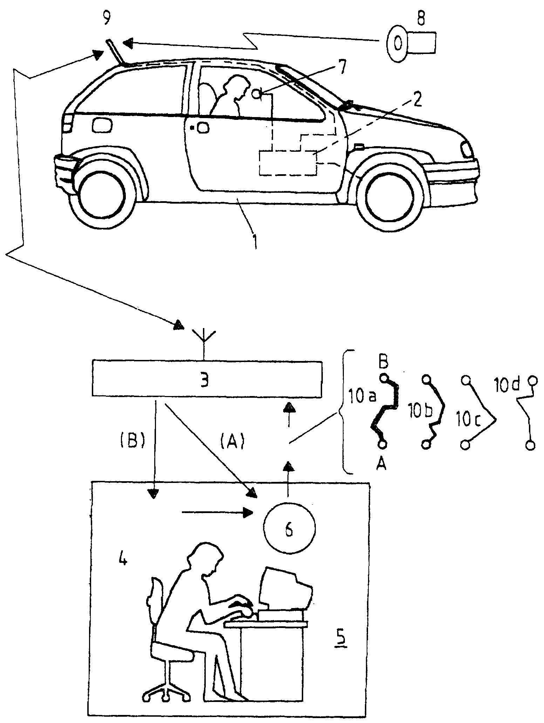

Im Folgenden wird die Erfindung mit Hilfe der Figur beispielhaft erläutert.

Die einzige Figur zeigt schematisch das Zusammenwirken zwischen einer Datenzentrale 5 und einem Fahrzeug 1 mit einem fahrzeugbasierten Navigationssystem 2.

Fahrzeugbasierte autonome Navigationsgeräte sind bekannt und enthalten üblicherweise ein CD-ROM Laufwerk, mit dessen Hilfe das auf einer CD-ROM abgespeicherte digitalisierte Straßennetz gelesen werden kann. Derartige Systeme können auch dynamisierbar sein, indem zum Beispiel aktuelle Staumeldungen oder Baustellen über RDS-TMC mitgeteilt werden. Nachteilig bei derartigen autonomen Navigationsgeräten ist jedoch, dass sie eine erhebliche Rechenleistung benötigen und dass die auf CD-ROM vorliegenden Daten nicht immer hinsichtlich der Straßenführung aktuell sein können.

Es ist daher bekannt, fahrzeugbasierte Navigationssysteme über Funkverbindungen mit einer ortsfesten Datenzentrale 5 zu koppeln, um auf Datenbestände und Rechenleistung in der Datenzentrale 5 zurückgreifen zu können. Bei dem in der Figur dargestellten System ist dabei ein Radiophone mit GSM-Telefon und GPS-Empfänger (Global Positioning System), bei dem es sich zum Beispiel um ein GEMINI GPS 148 der Firma Blaupunkt handeln kann, mit einem elektronischen Kompass (Gyro) und einer Geschwindigkeitssignalauswertung (Tachosignal-Auswertung) vorhanden. Mit diesen Hilfsmitteln und mit dem GPS-Empfänger, der Ortungssignale von Satelliten 8 empfängt, sowie mit entsprechender lokaler Software entsteht ein fahrzeugbasiertes Navigationssystem 2, das eine Ortung des Fahrzeuges 1 vornehmen kann.

Das Ortungsmodul im fahrzeugbasierten Navigationssystem ermittelt dabei die Position des Fahrzeuges 1 mit Hilfe des GPS-Empfängers und des Gyros. Diese aktuelle Position A und die mit Hilfe eines Tachosignals ermittelte Geschwindigkeit des Fahrzeuges 1 werden dann über das Radiophone per GPRS (General Radio Packet Service) Datenverbindung an die Datenzentrale 5 übermittelt.

Das fahrzeugbasierte Navigationssystem 2 enthält im dargestellten Beispiel weiterhin ein Mikrofon 7, über welches der Fahrer Spracheingaben vornehmen kann. Diese Spracheingaben werden über die Funkverbindung zwischen dem Fahrzeug 1 und einer GSM-Basisstation 3 der Datenzentrale 5 mitgeteilt, wo sie ein Operator 4 hört und auswertet. Der Operator 4 gibt insbesondere das mündlich übermittelte Ziel B in den Navigations-rechner 6 in der Datenzentrale 5 ein.

Nach Eingang der anschließend übermittelten Positionsmeldung A vom Kraftfahrzeug 1 bei der Datenzentrale 5 berechnet der Navigations-rechner 6 die optimale Route 10a zum Ziel B. Er übermittelt dann ein Navigationsdatenpaket, welches ein Gebiet mit einem Radius von etwa 10 Fahrminuten um die aktuelle Position A des Kraftfahrzeugs 1 abdeckt, sowie die beste Route 10a und einige im Voraus berechnete Alternativrouten-Empfehlungen 10b, 10c, 10d via GPRS an das fahrzeugbasierte Navigationssystem 2.

Das fahrzeugbasierte Navigationssystem 2 kann dann die optimale Fahrtroutenempfehlung 10a in Abgleich mit der aktuellen Position aus dem Ortungsmodul und mit der Geschwindigkeit des Fahrzeuges an den Fahrer akustisch über Fahrempfehlungen und/oder optisch über Pfeildarstellungen auf einem vorzugsweise einfach gehaltenen Display weitergeben.

Weicht der Fahrer von der empfohlenen optimalen Route ab und folgt er einer der schon im Voraus berechneten Alternativrouten, so erkennt dies die Navigationssoftware des fahrzeugbasierten Navigationssystems 2 und gibt dementsprechend weitere akustische und/oder optische Fahrempfehlungen. Weicht der Fahrer auf eine der Navigationssoftware bisher unbekannte Route aus, so kann das Navigationssystem 2 mit Hilfe der durch das Navigationsdatenpaket abgedeckten Straßennetzinformation versuchen, den Fahrer wieder auf die nächstliegende bekannte Fahrroute zurückzuführen.

Erreicht das Fahrzeug 1 die Nähe der Grenze des durch das Navigationsdatenpaket abgedeckten Straßennetzes und der berechneten Fahrtrouten, was ca, alle fünf bis zehn Minuten der Fall ist, so schickt das Radiophone 2 über GPRS eine Positionsmeldung und eine Anforderung eines neuen Navigationsdatenpakets an den Navigationsrechner 6 in der Datenzentrale 5, worauf der Navigationsrechner 6 mit einem neuen Navigationsdatenpaket antwortet. Auf diese Weise wird das Fahrzeug 1 in Routenabschnitten zum Ziel geleitet.

Der Radius des Navigationsdatenpakets und die Anzahl der Alternativrouten werden so gewählt, dass einerseits die maximale verfügbare Datenspeicherkapazität (im Allgemeinen RAM oder FLASH-EPROM) des Radiophones 2 nicht überschritten wird, sie andererseits aber ausreicht, um das fahrzeugbasierte Navigationssystem 2 eine Zeit lang (ca. zehn Minuten) autark navigieren zu lassen.

Die erfindungsgemäß erfolgende Berechnung und Übermittlung von Alternativrouten 10b, 10c, 10d zusammen mit der optimalen Route 10a hat den Vorteil, dass beim Auftreten unerwarteter Hindernisse oder einer unerwarteten Abweichung von der vorgegebenen Fahrtroute in der Regel sofort und ohne Verzögerung eine in Hinblick auf das Endziel optimierte Alternativroute zur Verfügung steht. Es muss daher in einem solchen Falle nicht erst zeitaufwendig eine neue Route im fahrzeugbasierten Navigationssystem berechnet werden oder erst eine Verbindung zur Datenzentrale 5 aufgebaut werden, in der dann die Berechnung der Alternativroute erfolgen würde.

## Patentansprüche

1. Verfahren zur Übermittlung von Navigationsinformationen von einer Datenzentrale (5) an ein fahrzeugbasiertes Navigations-system (2), wobei ein Fahrtziel (B) und der aktuelle Standort (A) des Fahrzeuges (1) an die Datenzentrale übermittelt werden und die Datenzentrale hieraus eine optimale Route (10a) berechnet und diese ganz oder sukzessive und in Teilstücke zerlegt an das fahrzeugbasierte Navigationssystem (2) übermittelt,
**dadurch gekennzeichnet, dass** die Datenzentrale (5) mindestens eine Alternativroute (10b, 10c, 10d) berechnet und diese ganz oder sukzessive und in Teilstücke zerlegt an das fahrzeugbasierte Navigationssystem (2) übermittelt.

2. Verfahren nach Anspruch 1,
**dadurch gekennzeichnet, dass** mehrere Alternativrouten (10b, 10c, 10d) berechnet und an das fahrzeugbasierte Navigations-system (2) übermittelt werden, wobei es sich um die Alternativrouten mit der höchsten Benutzungswahrscheinlichkeit handelt.

3. Verfahren nach Anspruch 2,
**dadurch gekennzeichnet, dass** die Benutzungswahrscheinlichkeit einer Alternativroute (10b, 10c, 10d) um so größer angesetzt wird, je mehr von ihr das der Routenbestimmung zugrunde liegende Optimierungskriterium erfüllt wird.

4. Verfahren nach einem der Ansprüche 2 oder 3,
**dadurch gekennzeichnet, dass** bei der Festlegung der Benutzungswahrscheinlichkeit einer Alternativroute (10b, 10c, 10d) die Wahrscheinlichkeit berücksichtigt wird, dass an einer Stelle der optimalen Route (10a) eine Störung auftritt, deren Berücksichtigung die Alternativroute zur optimalen Route machen würde.

5. Verfahren nach mindestens einem der Ansprüche 1 bis 4,
**dadurch gekennzeichnet, dass** die Datenzentrale (5) digitale Karteninformationen zur Umgebung des aktuellen Standortes (A) des Fahrzeuges (1) übermittelt.

6. Vorrichtung zur Übermittlung von Navigationsinformationen von einer Datenzentrale (5) an ein fahrzeugbasiertes Navigations-system (2), enthaltend eine Kommunikationseinrichtung (3) zur Übermittlung des gewünschten Fahrtziels (B) und des aktuellen Standortes (A) des Fahrzeuges (1) an die Datenzentrale und zur Rückübermittlung von Routendaten aus der Datenzentrale an das fahrzeugbasierte Navigationssystem (2), sowie eine Berechnungseinheit (6) in der Datenzentrale (5) zur Berechnung von Routenvorschlägen auf der Basis des übermittelten Fahrzeugstandortes (A) und des Fahrtzieles (B),
**dadurch gekennzeichnet, dass** die Berechnungseinheit so eingerichtet ist, dass sie ein Verfahren nach mindestens einem der Ansprüche 1 bis 5 durchführen kann.

7. Vorrichtung nach Anspruch 6,
**dadurch gekennzeichnet, dass** im Fahrzeug (1) eine Spracheingabevorrichtung (7) vorhanden ist zur Aufnahme und Weiterleitung von mündlichen Eingaben des Fahrers an die Datenzentrale (5).
